# EUROPEAN PATENT SPECIFICATION

(11) **EP 0 588 818 B1**
(45) Date of publication and mention of the grant of the patent: **09.08.1995**
(21) Application number: 92910205.1
(22) Date of filing: 13.05.1992
(51) Int. Cl.: F16D 13/64, F16D 13/68

(54) **FRICTION CLUTCH DRIVEN PLATES**
REIBUNGSKUPPLUNGSSCHEIBEN
DISQUES D'EMBRAYAGE A FRICTION

(30) Priority: 12.06.1991 GB 9112598; 07.08.1991 GB 9117005
(43) Date of publication of application: 30.03.1994
(73) Proprietor: AUTOMOTIVE PRODUCTS PUBLIC LIMITED COMPANY, Leamington Spa Warwickshire CV31 3ER (GB)
(72) Inventor: MURPHY, Robert, John, Newport, Gwent NP1 9PN (GB)
(74) Representative: Morrall, Roger
(86) International application number: GB9200861
(87) International publication number: WO9222754

(56) References cited:
- WO-A-91/10838
- US-A- 1 862 991
- US-A- 2 035 916
- US-A- 2 146 043

## Description

This invention relates to friction clutch driven plates for vehicles and in particular to friction clutch driven plates for cars.

A typical motor vehicle engine is connected to the vehicle gear box through a friction clutch which includes a pressure plate and flywheel connected to the engine, and a clutch driven plate sandwiched therebetween which is connected to the vehicle gear box.

In order to smooth out the clutch engagement on take up of the drive from the engine, the clutch driven plate generally has some axial cushioning between its opposed friction facings, and a torsion damping means between the friction facings which engage the engine, and the driven plate hub which is connected to the gear box.

In our application WO-A-91/10838 we have described a friction clutch driven plate having a hub and friction facings which face in opposite directions, the friction facings for each direction are mounted on a respective coaxial annular carrier plate, at least one of the carrier plates being rotatable about the hub, the two carrier plates being secured back to back with each other such that one carrier plate can rotate relative to the other carrier plate. Such a driven plate will be called a driven plate of the type referred.

According to the present invention there is provided a friction clutch driven plate having a hub and friction facings which face in opposite directions, the first and second friction facings are mounted on first and second coaxial carrier plates respectively, the two carrier plates being secured back to back and operably connected for limited rotation relative to the hub, the driven plate being characterised in that the two carrier plates have associated surfaces, said surfaces being biased towards each other and being rotatable relative to each other, to generate friction damping.

Such a driven plate prevents clutch judder and gives and improved clutch take up.

Preferably, the two carrier plates are secured together by fastening means passing through aligned holes in the two carrier plates, said holes in at least one carrier plate being enlarged relative to the fastening means to enable said one carrier plate to move rotationally relative to the other carrier plate, and conveniently the two carrier plates are in frictional engagement one with the other.

Preferably the radially inner portions of the carrier plates are shaped to act as belleville springs with at least one carrier plate biased against the other carrier plate.

Alternatively the hub has a radially outwardly extending flange, and the two carrier plates are secured to a disc adaptor arranged on one axial side of the hub flange, and the disc adaptor is secured to a retainer plate on the other axial side of the flange, said fastening means extending axially through co-operating apertures in the hub flange which allow the disc adaptor and retainer plate to move rotationally about the hub, the two carrier plates, being located axially between the hub flange and the disc adaptor, and resilient means located around each fastening means act to bias the carrier plates together.

Preferably the resilient means are belleville springs with at least one spring locating coaxially with each fastening means, and preferably each belleville spring acts between the retainer plate and disc adaptor through a sleeve slidable on the fastening means.

Alternatively the friction damping means includes a friction washer fast with the hub which engages a surface on said one carrier.

Preferably said relative rotation is also resisted by resilient means acting between the two carrier plates.

The invention will be described by way of example and with reference to the accompanying drawings in which:-

Fig 1 is an elevation of a friction clutch driven plate according to the invention.

Fig 2 is a section on the line II-II of Fig 1.

Fig 3 is an elevation of the fixed carrier plate of the driven plate of Fig 1.

Fig 4 is an elevation of the movable carrier plate of the driven plate of Fig 1, and

Fig 5,6,7 are sections similar to Fig 2 showing alternative friction damping means.

Fig 8 is an elevation of a further embodiment of a friction clutch driven plate according to the invention.

Fig 9 is a section on the IX-IX of Fig 8.

Fig 10 is an enlargement of the fastening means and resilient means shown in Fig 8.

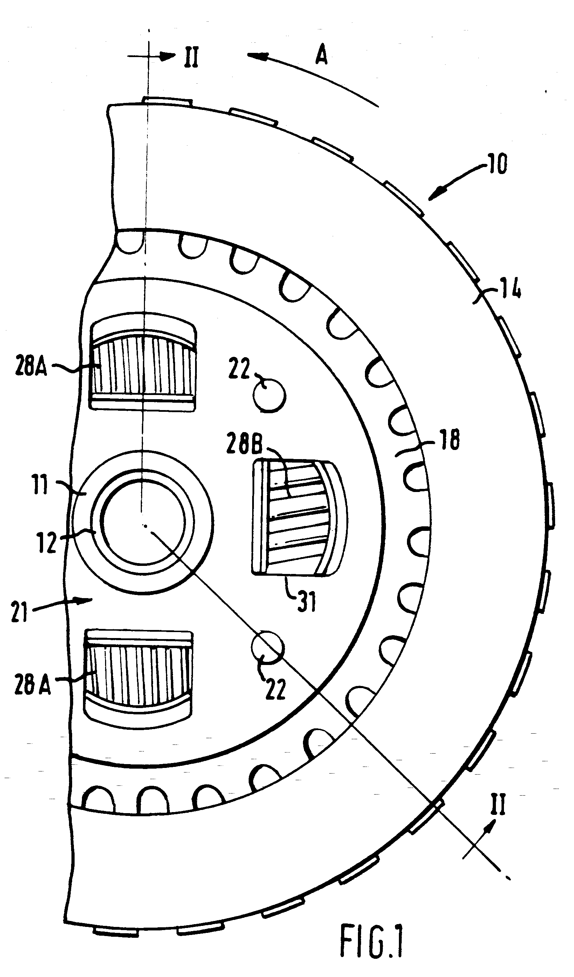

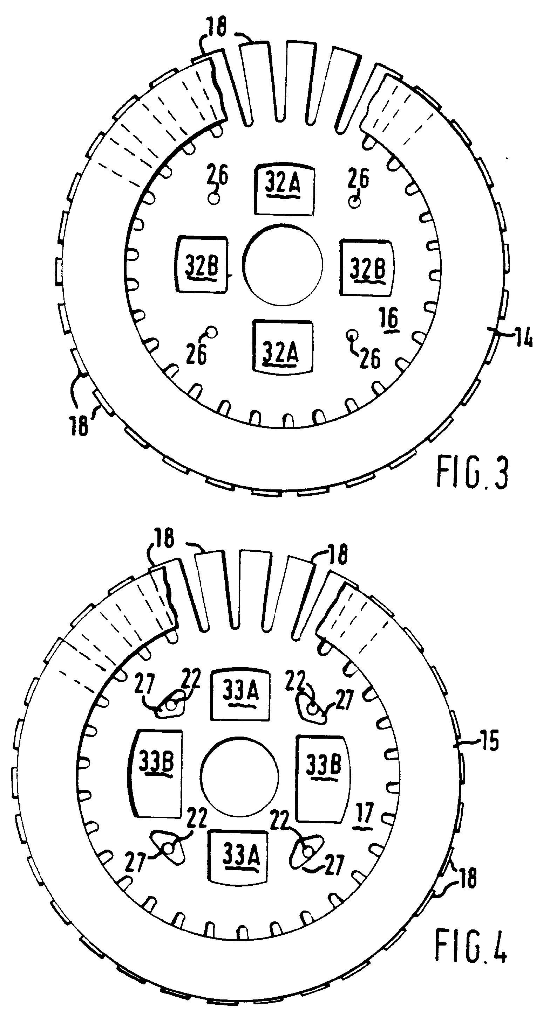

With reference to Figs 1 to 4 of the accompanying drawing, the illustrated friction clutch driven plate is comprises a hub 11 having internal splines 12 for connection with a gear box input shaft (not shown) and a radially outwardly extending annular flange 13.

A pair of annular friction facings 14 and 15 are each mounted on an annular carrier plate 16 and 17 respectively. Each carrier plate 16 and 17 is an annular plate having a plurality of circumferentially spaced radially extending fingers 18 projecting outwardly from its outer periphery.

The facings 14 and 15 are secured to the fingers 18 of the respective carrier plate 16 or 17 by any suitable means e.g. rivets, integral rivets, tabs, adhesives. It has been found that silicone rubber adhesive which is laid onto the back face of the facing 14 or 15 in concentric circles, or spiral turns, is particularly suitable. The reader is directed to EP252583, EP323036, and WO 89/05411 for a more detailed description of the adhesion of facings to a carrier plate of the present type using silicone rubber adhesives. In particular it is advantageous to use a silicone rubber adhesive for the facing 15 in use adjacent the clutch pressure plate and a conventional rigid adhesive in use adjacent the flywheel.

The carrier plates 16 and 17 are flat steel plates that are arranged back to back with the facings 14 and 15 directed in opposite directions for engagement in use with a flywheel and pressure plate. The two carrier plates 16 and 17 are located on one axial side of the hub flange 13 and are secured to a disc adaptor 21 located axially outwardly of the carrier plates 16 and 17 by four equiangularly spaced rivets or stop pins 22. The stop pins 22 also serve to secure the disc adaptor 21 to a retainer plate 23 located on the other axial side of the hub flange 13. The stop pins 22 pass through co-operating apertures 24 in the outer peripheral margin of the hub flange 13 so that the carrier assembly comprising the carrier plates 16, 17, disc adaptor 21, and retainer plate 23, can rotate relative to the hub 11.

The relative rotation is limited by abutment of the stop pins 22 with the radial ends of the apertures 24. The entire carrier assembly may be mounted to facilitate rotation on a bush (not shown) located between the hub 11 and the retainer plate 23, or disc adaptor 21.

The two carrier plates 16 and 17 are arranged so that one carrier plate 16 which in use is adjacent the flywheel is fixed rotationally fast with the disc adaptor 21 by the stop pins 22 closely engaging in holes 26 in the plate 16, whereas the second carrier plate 17 in use adjacent the pressure plate is capable of limited angular rotation relative to the first carrier plate 16. This rotation is allowed by the pins 22 being accommodated by circumferentially elongated holes 27 in the plate 17, which allow for approximately 5 degrees of movement between the two carrier plates 16 and 17 in either direction of rotation, and for rotation of the second carrier plate 17 relative to the hub 11. Alternatively the carrier plates 16 and 17 may be arranged for relative rotation in one direction only.

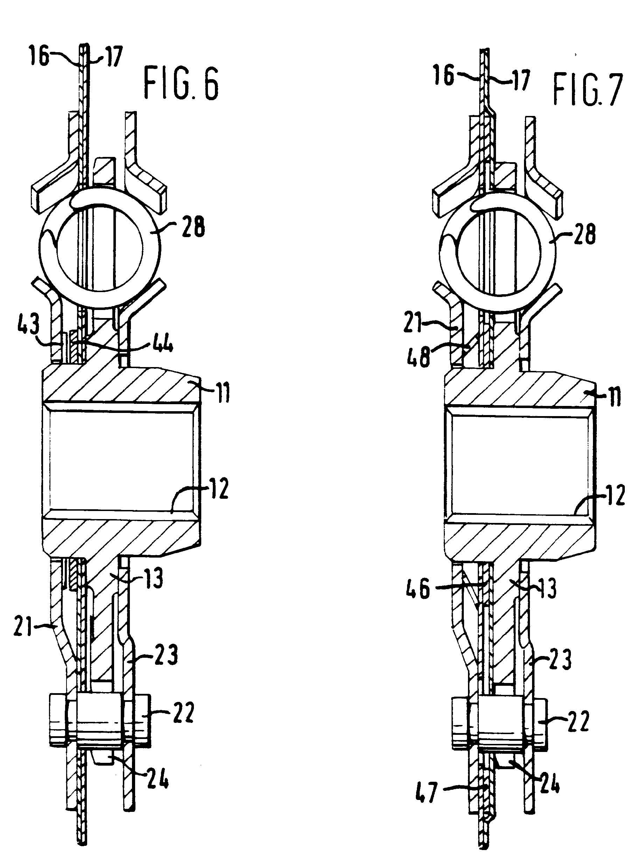

This arrangement could be reversed, as showing in Figs 6 and 7 with the carrier plate 17 adjacent the hub flange 13 fixed on the stop pins 22 and the carrier plate 16 adjacent the disc adaptor 21 having the elongated holes therein to allow it to move around the hub.

The carrier plate 17 in use is adjacent the pressure plate and the carrier plate 16 in use is adjacent the flywheel.

In yet a further embodiment, both carrier plates could have elongated apertures therein allowing each plate some limited circumferential movement. Again the relative movement could be in one direction only relative to each other and relative to the driven plate centre.

The relative rotation of the friction facings 14 and 15 relative to the hub 11 is also resisted by resilient means, preferably springs 28, housed in aligned sets of apertures 29, known as spring windows, in the hub flange 13, carrier plates 16 and 17, disc adaptor 21, and retainer plate 23. In the present embodiment there are four springs 28 housed in four sets of apertures 29 but other number of springs could be used, e.g. three to eight springs.

Each set of apertures 29 comprises a disc adaptor spring window 31, a fixed carrier plate spring window 32, a movable carrier plate spring window 33, a hub flange spring window 34, and retainer plate spring window 35.

The springs 28 comprises two diametrically opposed light torsion damping springs 28A and two diametrically opposed main torsion damping springs 28B act to resist relative rotation initially between the two carrier plates 16 and 17, and thereafter between the carrier assembly and the hub 11.

The main torsion damping springs 28B act to resist relative rotation between the carrier assembly and the hub 11.

A belleville washer 30 located between the hub flange 13 and the carrier plate 17 biases the radially inner margins of the two carrier plates 16 and 17 into frictional engagement. This provides some friction damping acting to resist relative rotation between two carrier plates 16 and 17. The plates 16 and 17 can be steel on steel or can be coated by for example phosphating, or can have different frictional coefficients.

The operation of the friction clutch driven plate will now be described with the hub held stationary and a torque load applied to the friction facings to rotate the facings in the direction of arrow 'A' as shown in Fig 1.

During the take up of the clutch, as the friction facings begin to frictionally engage between the pressure plate and the flywheel under the clamp load of a spring, the friction facing 15 adjacent to the pressure plate will normally engage first fractionally before the other facing engages with the flywheel.

As the friction facing 15 engage the pressure plate, the torsion load will rotate the movable carrier plate 17 relative to the fixed carrier plate 16 which is held stationary relative to the hub 11 by the main torsion springs 28B engaging in the fixed carrier plate spring windows 32B. As the carrier plate 17 is rotated the light springs 28A are compressed between opposed radial faces in the spring windows 31A, 32A and 35A, in the fixed carrier plate 17, the disc adaptor 21, and retainer plate 23, on the one hand, and the opposed radial face in the movable carrier plate spring window 33A.

Simultaneously, the clearance in the spring window 33B around the main torsion damping springs 28B, allows the moveable carrier plate 17 to rotate without interference from the main spring 28B until, the clearance has been taken up.

When the clearance has been taken up the movable carrier plate 17 engages the stop pins 22 through the ends of the apertures 27 and the relative position between the two carrier plates is then fixed, so that any further rotational movement of the facing 15 will also cause the carrier plate 16 to rotate and both plates will move together with further compression of the light spring 28A until the light spring 28A abuts the end of its respective hub flange window 34A.

The degree of rotation at which spring 28A comes against the end of hub flange window 34A may coincide with the abutment of the moveable carrier plate window 33B against the main torsion damping springs 28B, and the abutment of the stop pins 22 against the ends of the apertures 27.

However the various clearances can be altered as is desired to achieve a required torque verses relative rotation curve.

Once the two carrier plates 16 and 17 are rotationally fixed, either by the abutment of the stop pins 22 against the ends of the apertures 27, or by the application of a sudden and large spring clamp load, then further rotation of the carrier assembly around the hub is resisted by all the springs 28 in the well known manner.

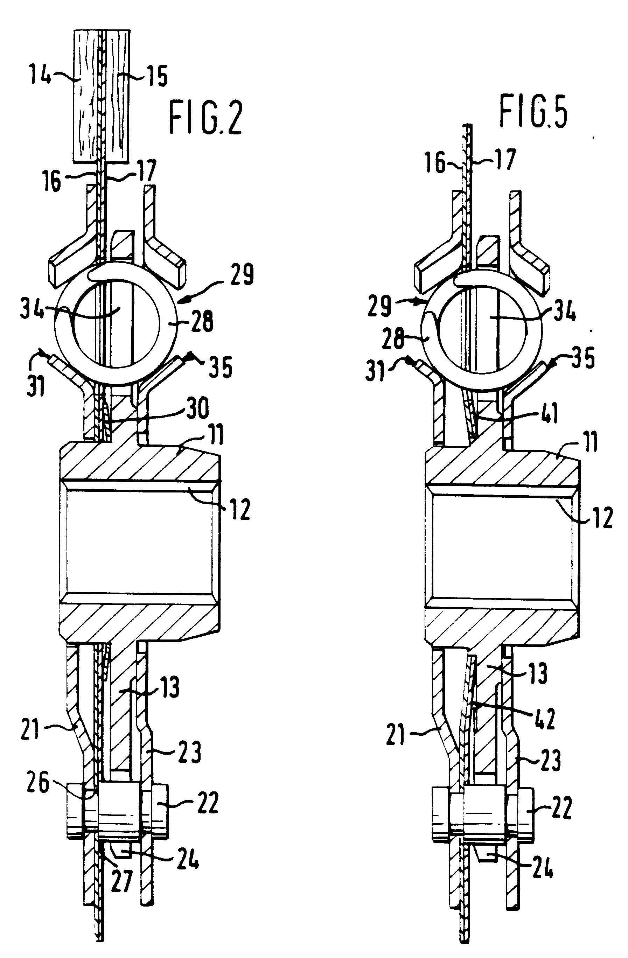

With reference to Fig 5, the driven plate is identical with that shown in Figs 1-4, except that radially inner portions 41, 42 of the two carrier plates 16 and 17 are formed as belleville springs sections and bias against each other to create the frictional engagement between the two carrier plates 16 and 17. The belleville portion 42 of the rotary plate 17 reacts against the hub flange 13 to bias itself against the other carrier plate 16.

With reference to Fig 6, the carrier plate 17 is in frictional engagement with the hub flange 13, and is biased against the hub flange 13 by a spring washer 43, preferably a wavy washer acting between the disc adaptor 21 and a friction washer 44 adjacent the carrier plate 16. The friction washer 44 is rotationally fast with the hub 11 or the disc adaptor 21, so that the initial movement of the carrier plate 16 which is relative to both hub 11 and the disc adaptor 21 is resisted by friction engagement between the friction washer 44 and the carrier plate 16, and also by the frictional engagement between the two carrier plates 16 and 17.

With reference to Fig 7, the embodiment is similar to that shown in Fig 6, excepting that there are two concentric friction damping washers 46, 47 located between the carrier plate 16 and 17. The fixed carrier plate 17 is dished to accommodate the two washers, one washer 46 being adjacent the hub 11, and the other washer 47 being radially outside the stop pin 22. A belleville spring 48 acts between the disc adaptor 21 and the movable carrier plate 16 to bias the carrier plate 16 against the friction washer 46. The friction washers 46 and 47 are fixed to the fixed carrier plate.

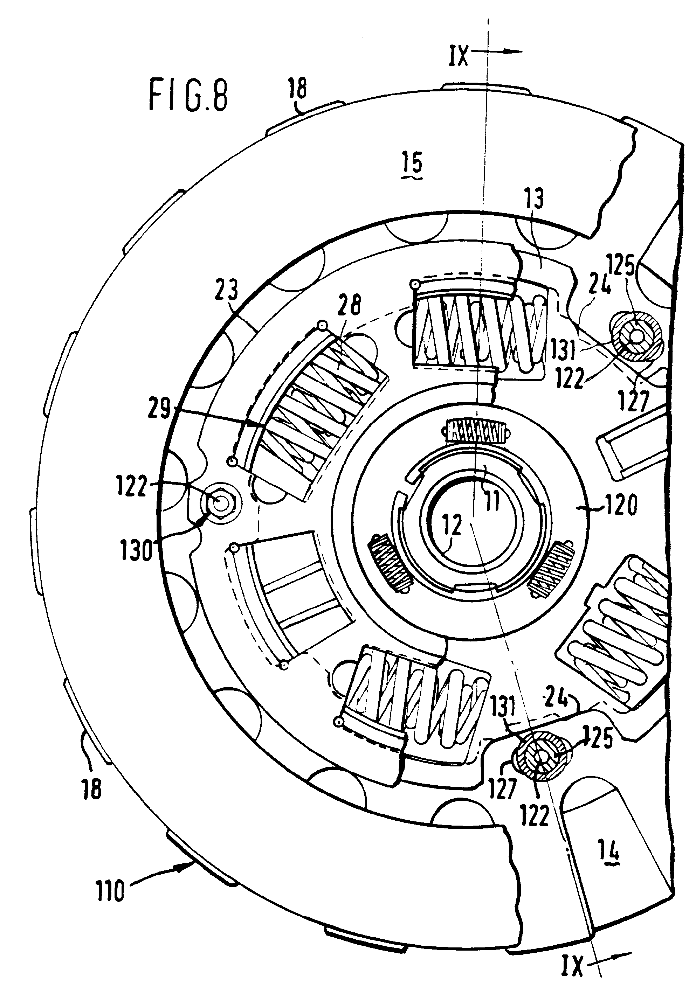

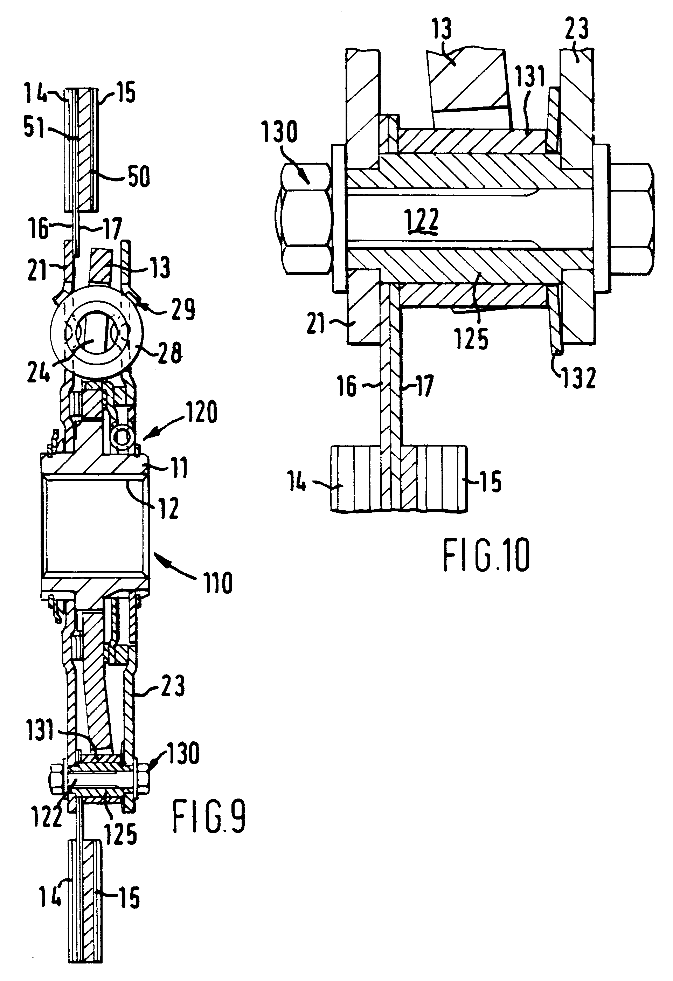

Now with reference to Figs 8 to 10 of the accompanying drawing, there is illustrated yet another friction clutch driven plate 110 according to the invention.

Those components of the driven plate 110 which are similar to those described with reference to Figs 1-4 will be given the same reference numbers, and only the difference will be described.

The flange 13 may be fixed relative to the hub as is shown in Figs 1 to 7, or may be capable of limited angular movement about the hub 11. (As shown). The movement between the hub flange 13 and the hub is retained by a first stage damping means 120. The operation of the first stage damping means 120 is described in detail in EP0414360.

The stop pin assemblies 122 may be in the form of stepped rivets but in this case are shown as threaded set screws and nuts 130, within a surrounding spacer sleeve 125. The stop pin assemblies 122 also serve to secure the disc adaptor 21 to the retainer plate 23 located on the other axial side of the hub flange 13. The rotation of the carrier assembly 16,17,21,23 rotation relative to the hub flange 13 is limited by abutment of the stop pin assemblies 122 with the radial ends of the apertures 24. Both carrier plates 16 and 17 are capable of limited angular rotation relative to each other and relative to the stop pins 122. The stop pins 122 each pass through the spacer sleeve 125 which acts to space the adaptor disc 21 from the retainer plate 23. The rotation is allowed by the stop pin assemblies 122 being accommodated by circumferentially elongated holes 127 in the plates 16 and 17, which allow for approximately 5 degrees of movement between the two carrier plates 16 and 17 in either direction of rotation, and for rotation of the carrier plates 16 or 17 is fixed on the stop pin assemblies 122 and the other carrier plate has the elongated holes therein to allow it to move around the hub.

Each stop pin assembly 122 is surrounded by a hollow cylindrical sleeve 131 which is free to move axially on the spacer 125. The sleeve 131 is biased against the carrier plate 17 by a belleville washer 132 reacting against the retainer plate 23. The bias of the belleville washer holds the two plates 16 and 17 together and creates a friction engagement therebetween.

The relative rotation of the friction facings 14 and 15 relative to the hub 11 is resisted by main torsion damping means 28 either helical springs or rubber springs housed in aligned sets of spring washers 29, and by the first stage damping means 120.

In an alternative construction (not shown) the belleville washer 132 could be located at the other end of the sleeve 131 to act directly against the carrier plate 17.

The length of the sleeve 131 could be made adjustable by a screw threaded means in order to provide a means for setting the friction damping to a required level, for different vehicles by varying the load in belleville spring(s).

In yet another embodiment the sleeve and belleville washer could be replaced by a helical spring.

The number of belleville washers could be greater than one as is required for a desired spring load.

## Claims

1. A friction clutch driven plate having a hub (11) and friction facings (14.15) which face in opposite directions, the first and second friction facings are mounted on first and second coaxial carrier plates (16,17) respectively, the two carrier plates being secured back to back and operably connected for limited rotation relative to the hub, the driven plate being characterised in that the two carrier plates have associated surfaces, said surfaces being biased towards each other and being rotatable relative to each other, to generate friction damping.

2. A friction clutch driven plate as claimed in Claim 1, wherein both carrier plates (16,17) are free to rotate relative to the hub (11).

3. A friction clutch plate as claimed in Claim 1 or Claim 2 wherein the two carrier plates (16,17) are biased against each other so that the associated surfaces of the two carrier plates are in frictional engagement.

4. A friction clutch driven plate as claimed in Claim 3 wherein the radially inner portions (41,42) of the two carrier plates (16,17) are formed as belleville spring sections and bias said associated surfaces against each other.

5. A friction clutch driven plate as in any one of Claims 1 to 3 wherein the two carrier plates (16, 17) are secured black to back with each other by fastening means (22, 122) passing through aligned holes (26, 27, 127) in the two plates, said holes on at least the second plate being enlarged relative to the fastening means to enable the second carrier plate to move relative to the other carrier plate, and resilient means (30, 43, 48, 132) acts on at least one the two carrier plates to bias the plates (16, 17) together.

6. A friction clutch driven plate as claimed in Claim 5 wherein both carrier plates (16, 17) have enlarged holes therein relative to said fastening means.

7. A friction clutch driven plate as claimed in Claim 5 in which the hub (11) has a radially outwardly extending flange (13) and the two carrier plates (16, 17) are located on one axial side on the flange (13), the carrier plates being located between the flange and a disc adaptor (21) on said one axial side of the flange (13), and the first carrier plate adjacent the disc adaptor (21) is fixed thereto and the second carrier plate having the enlarged holes (27) therein is adjacent the hub flange (13), and the resilient means (30) acts between the hub flange (13) and the second carrier plate.

8. A friction clutch driven plate as claimed in Claim 5 or Claim 6 wherein the hub (11) has a radially outwardly extending flange (13), and the two carrier plates (16, 17) are secured to a disc adaptor (21) arranged on one axial side of the hub flange (13), and the disc adaptor is secured by fastening means (122) to a retainer plate (23) on the other axial side of the flange (13), said fastening means (122) extending axially through co-operating apertures in the hub flange (13) which allow the disc adaptor and retainer plate to move rotationally about the hub, the two carrier plates (16, 17) being located axially between the hub flange and the disc adaptor, and resilient means (132) located around each fastening means (122) act to bias the carrier plates together.

9. A friction clutch driven plate as claimed in Claim 8, wherein the resilient means are belleville springs (132) with at least one spring locating coaxially with each fastening means (122).

10. A friction clutch driven plate as claimed in Claim 9, wherein each belleville spring acts between the retainer plate (23) and the disc adaptor (21) through a sleeve (131) slidable on the fastening means (122).

11. A friction clutch driven plate according to Claim 1, or Claim 2, and Claim 5 or Claim 6 or Claim 7 when dependant upon Claim 1 and Claim 2 wherein at least one friction engaging means (44, 46, 47) is biased into frictional engagement with a relatively rotatable portion of at least one of the carrier plates.

12. A friction clutch driven plate as claimed in Claim 11 wherein the friction engaging means comprises at least one friction washer (46, 47) located between the two carrier plates (16, 17) in operable frictional engagement with at least one of the carrier plates.

13. A friction clutch driven plate as claimed in Claim 11 or Claim 12 when dependant upon Claim 5 or Claim 6 or Claim 7 wherein the friction engaging means (44, 46, 47) is biased against the second carrier plate having the enlarged holes therein.

14. A friction clutch plate as claimed in Claim 13 when dependant upon Claim 7 wherein the friction engaging means (44) is located between the disc adaptor (21) and the second carrier plate and is biased against the second carrier plate by a spring washer (43) acting against the disc adaptor.

15. A friction clutch driven plate as claimed in Claim 13 or Claim 14 wherein the friction engaging means (46, 47) is secured to a carrier plate for frictional engagement with the other carrier plate.

16. A friction clutch driven plate as claimed in Claim 12 or Claim 15 when dependant upon Claim 12, wherein there are two concentric friction washers (46, 47) which are accommodated and secured to a dished portion of a fixed carrier plate and frictionally engage with the other relatively movable carrier plate.

## Patentansprüche

1. Treibscheibe für eine Reibkupplung, die eine Nabe (11) und Reibbeläge (14, 15), die in entgegengesetzte Richtungen zeigen, hat, wobei der erste und der zweite Reibbelag jeweils auf ersten und zweiten koaxialen Mitnehmerscheiben (16, 17) angebracht sind, die beiden Mitnehmerscheiben mit den Rückseiten zueinander befestigt und funktionell für eine begrenzte Drehung im Verhältnis zur Nabe verbunden sind, wobei die Treibscheibe dadurch gekennzeichnet ist, daß die beiden Mitnehmerscheiben zugeordnete Flächen haben, wobei die Flächen zueinander vorgespannt und im Verhältnis zueinander drehbar sind, um eine Reibungsdämpfung zu erzeugen.

2. Treibscheibe für eine Reibkupplung nach Anspruch 1, bei der beide Mitnehmerscheiben (16, 17) im Verhältnis zur Nabe (11) frei rotieren können.

3. Treibscheibe für eine Reibkupplung nach Anspruch 1 oder Anspruch 2, bei der die beiden Mitnehmerscheiben (16, 17) gegeneinander vorgespannt sind, so daß die zugeordneten Flächen der beiden Mitnehmerscheiben im Reibungseingriff sind.

4. Treibscheibe für eine Reibkupplung nach Anspruch 3, bei der die in Radialrichtung inneren Abschnitte (41, 42) der beiden Mitnehmerscheiben (16, 17) als Tellerfederabschnitte geformt sind und die zugeordneten Flächen gegeneinander vorspannen.

5. Treibscheibe für eine Reibkupplung nach einem der Ansprüche 1 bis 3, bei der die beiden Mitnehmerscheiben (16, 17) mit den Rückseiten zueinander durch Befestigungsmittel (22, 122) befestigt sind, die durch ausgerichtete Löcher (26, 27, 127) in den beiden Scheiben führen, wobei die Löcher in wenigstens der zweiten Scheibe im Verhältnis zum Befestigungsmittel vergrößert sind, um zu ermöglichen, daß sich die zweite Mitnehmerscheibe im Verhältnis zu der anderen Mitnehmerscheibe bewegen kann, und elastische Mittel (30, 43, 48, 132) auf wenigstens eine der beiden Mitnehmerscheiben wirken, um die Scheiben (16, 17) zueinander vorzuspannen.

6. Treibscheibe für eine Reibkupplung nach Anspruch 5, bei der sich in beiden Mitnehmerscheiben (16, 17) im Verhältnis zu den Befestigungsmitteln vergrößerte Löcher befinden.

7. Treibscheibe für eine Reibkupplung nach Anspruch 5, bei der die Nabe (11) einen in Radialrichtung nach außen verlaufenden Flansch (13) hat und die beiden Mitnehmerscheiben (16, 17) auf einer Axialseite des Flanschs (13) angeordnet sind, wobei sich die Mitnehmerscheiben zwischen dem Flansch und einem Scheibenadaptor (21) auf der einen Axialseite des Flanschs (13) befinden und wobei die erste Mitnehmerscheibe, die am Scheibenadaptor (21) anliegt, daran befestigt ist und die zweite Mitnehmerscheibe, welche die vergrößerten Löcher (27) aufweist, am Nabenflansch (13) anliegt und wobei das elastische Mittel (30) zwischen dem Nabenflansch (13) und der zweiten Mitnehmerscheibe wirksam ist.

8. Treibscheibe für eine Reibkupplung nach Anspruch 5 oder Anspruch 6, bei der die Nabe (11) einen in Radialrichtung nach außen verlaufenden Flansch (13) hat und die beiden Mitnehmerscheiben (16, 17) an einem Scheibenadaptor (21) befestigt sind, der auf einer Axialseite des Nabenflanschs (13) angeordnet ist, und der Scheibenadaptor durch Befestigungsmittel (122) an einer Sicherungsplatte (23) auf der anderen Axialseite des Flanschs (13) befestigt ist, wobei die Befestigungsmittel (122) in Axialrichtung durch zusammenwirkende Öffnungen im Nabenflansch (13) verlaufen, die es dem Scheibenadaptor und der Sicherungsplatte ermöglichen, sich rotierend um die Nabe zu bewegen, wobei die beiden Mitnehmerscheiben (16, 17) in Axialrichtung zwischen dem Nabenflansch und dem Scheibenadaptor angeordnet sind, und elastische Mittel (132) die um jedes der Befestigungsmittel (122) angeordnet sind, die Vorspannung der Mitnehmerscheiben zueinander bewirken.

9. Treibscheibe für eine Reibkupplung nach Anspruch 8, bei der die elastischen Mittel Tellerfedern (132) mit wenigstens einer Feder sind, die koaxial mit jedem der Befestigungsmittel (122) angeordnet ist.

10. Treibscheibe für eine Reibkupplung nach Anspruch 9, bei der die Tellerfeder zwischen der Sicherungsplatte (23) und dem Scheibenadaptor (21) durch eine Hülse (131) hindurch wirkt, die auf den Befestigungsmitteln (122) gleiten kann.

11. Treibscheibe für eine Reibkupplung nach Anspruch 1 oder Anspruch 2 und Anspruch 5 oder Anspruch 6 oder Anspruch 7 in Abhängigkeit von Anspruch 1 und Anspruch 2, bei der wenigstens eines der Reibungseingriffsmittel (44, 46, 47) zum Reibungseingriff mit einem relativ drehbaren Abschnitt wenigstens einer der Mitnehmerscheiben vorgespannt wird.

12. Treibscheibe für eine Reibkupplung nach Anspruch 11, bei der das Reibungseingriffsmittel wenigstens eine Spannscheibe (46, 47) aufweist, die sich zwischen den beiden Mitnehmerscheiben (16, 17) im funktionellen Reibungseingriff mit wenigstens einer der Mitnehmerscheiben befindet.

13. Treibscheibe für eine Reibkupplung nach Anspruch 11 oder Anspruch 12 in Abhängigkeit von Anspruch 5 oder Anspruch 6 oder Anspruch 7, bei der das Reibungseingriffsmittel (44, 46, 47) gegen die zweite Mitnehmerscheibe vorgespannt ist, in der sich die vergrößerten Löcher befinden.

14. Treibscheibe für eine Reibkupplung nach Anspruch 13 in Abhängigkeit von Anspruch 7, bei der sich das Reibungseingriffsmittel (44) zwischen dem Scheibenadaptor (21) und der zweiten Mitnehmerscheibe befindet und gegen die zweite Mitnehmerscheibe durch einen Federring (43) vorgespannt ist, der gegen den Scheibenadaptor wirkt.

15. Treibscheibe für eine Reibkupplung nach Anspruch 13 oder Anspruch 14, bei der das Reibungseingriffsmittel (46, 47) an einer Mitnehmerscheibe zum Reibungseingriff mit der anderen Mitnehmerscheibe befestigt ist.

16. Treibscheibe für eine Reibkupplung nach Anspruch 12 oder Anspruch 15 in Abhängigkeit von Anspruch 12, bei der zwei konzentrische Spannscheiben (46, 47) vorhanden sind, die in einem gewölbten Abschnitt einer feststehenden Mitnehmerscheibe untergebracht und befestigt sind und reibend in die andere relativ bewegliche Mitnehmerscheibe eingreifen.

## Revendications

1. Disque d'embrayage à friction comportant un moyeu (11) et des garnitures de friction (14, 15), orientées dans des directions opposées, les première et deuxième garnitures de friction étant montées respectivement sur des première et deuxième plaques de support coaxiales (16, 17), les deux plaques de support étant fixées dos à dos et étant connectées en service en vue d'une rotation limitée par rapport au moyeu, le disque d'embrayage étant caractérisé en ce que les deux plaques de support ont des surfaces associées, lesdites surfaces étant pressées l'une vers l'autre et pouvant tourner l'une par rapport à l'autre pour produire un amortissement de friction.

2. Disque d'embrayage à friction selon la revendication 1, dans lequel les deux plaques de support (16, 17) peuvent tourner librement par rapport au moyeu (11).

3. Disque d'embrayage à friction selon les revendications 1 ou 2, dans lequel les deux plaques de support (16, 17) sont pressées l'une contre l'autre de sorte que les surfaces associées des deux plaques de support sont engagées par friction.

4. Disque d'embrayage à friction selon la revendication 3, dans lequel les parties radialement internes (41, 42) des deux plaques de support (16, 17) ont la forme de sections de ressort Belleville et pressent lesdites surfaces associées l'une contre l'autre.

5. Disque d'embrayage à friction selon l'une quelconque des revendications 1 à 3, dans lequel les deux plaques de support (16, 17) sont fixées dos à dos l'une à l'autre par des moyens de fixation (22, 122) traversant des trous alignés (26, 27, 127) dans les deux plaques, lesdits trous dans au moins la deuxième plaque étant agrandis par rapport au moyen de fixation pour permettre la rotation relative de la deuxième plaque de support par rapport à l'autre plaque de support, des moyens élastiques (30, 43, 48, 132) agissant sur au moins une des deux plaques de support pour presser les plaques (16, 17) l'une vers l'autre.

6. Disque d'embrayage à friction selon la revendication 5, dans lequel les deux plaques de support (16, 17) comportent des trous agrandis par rapport audit moyen de fixation.

7. Disque d'embrayage à friction selon la revendication 5, dans lequel le moyeu (11) comporte une flasque (13) s'étendant radialement vers l'extérieur, les deux plaques de support (16, 17) étant agencées sur un côté axial de la flasque (13), les plaques de support étant agencées entre la flasque et un adaptateur de disque (21) sur ledit un côté axial de la flasque (13), la première plaque de support, adjacente à l'adaptateur de disque (21) y étant fixée et la deuxième plaque de support comportant les trous agrandis (27) étant adjacente à la flasque du moyeu (13), le moyen élastique (30) agissant entre la flasque du moyeu (13) et la deuxième plaque de support.

8. Disque d'embrayage à friction selon les revendications 5 ou 6, dans lequel le moyeu (11) comporte une flasque (13) s'étendant radialement vers l'extérieur, les deux plaques de support (16, 17) étant fixées à un adaptateur de disque (21), agencé sur un côté axial de la flasque du moyeu (13), l'adaptateur de disque étant fixé par un moyen de fixation (122) à une plaque de retenue (23) sur l'autre côté axial de la flasque (13), ledit moyen de fixation (122) s'étendant axialement à travers des ouvertures de coopération dans la flasque du moyeu (13), permettant la rotation de l'adaptateur de disque et de la plaque de retenue autour du moyeu, les deux plaques de support (16, 17) étant agencées axialement entre la flasque du moyeu et l'adaptateur de disque, et des moyen élastiques (132), agencés autour de chaque moyen de fixation (122), servant à presser les plaques de support l'une vers l'autre.

9. Disque d'embrayage à friction selon la revendication 8, dans lequel les moyens élastiques sont des ressorts Belleville (132), au moins un ressort étant coaxial à chaque moyen de fixation (122).

10. Disque d'embrayage à friction selon la revendication 9, dans lequel chaque ressort Belleville agit entre la plaque de retenue (23) et l'adaptateur de disque (21) par l'intermédiaire d'un tube (131) pouvant glisser sur le moyen de fixation (122).

11. Disque d'embrayage à friction selon les revendications 1 ou 2, les revendications 5 ou 6 ou la revendication 7, dans la mesure où elle dépend des revendications 1 et 2, dans lequel au moins un moyen d'engagement par friction (44, 46, 47) est pressé dans un engagement par friction avec une partie à rotation relative d'au moins une des plaques de support.

12. Disque d'embrayage à friction selon la revendication 11, dans lequel le moyen d'engagement par friction comprend au moins une rondelle de friction (46, 47), agencée entre les deux plaques de support (16, 17) et pouvant s'engager en service par friction dans au moins une des plaques de support.

13. Disque d'embrayage à friction selon les revendications 11 ou 12, dans la mesure où elles dépendant des revendications 5 ou 6 ou de la revendication 7, dans lequel le moyen d'engagement par friction (44, 46, 47) est pressé contre la deuxième plaque de support comportant les trous agrandis.

14. Disque d'embrayage à friction selon la revendication 13, dans la mesure où elle dépend de la revendication 7, dans lequel le moyen d'engagement par friction (44) est agencé entre l'adaptateur de disque (21) et la deuxième plaque de support et est pressé contre la deuxième plaque de support par une rondelle élastique (43) s'opposant à l'adaptateur de disque.

15. Disque d'embrayage à friction selon les revendications 13 ou 14, dans lequel le moyen d'engagement par friction (46, 47) est fixé à une plaque de support en vue de l'engagement par friction dans l'autre plaque de support.

16. Disque d'embrayage à friction selon les revendications 12 ou 15, dans la mesure où elles dépendent de la revendication 12, comportant deux rondelles de friction concentriques (46, 47), logées et fixées dans une partie incurvée d'une plaque de support fixe et s'engageant par friction dans l'autre plaque de support relativement mobile.
